(19) Europäisches Patentamt

European Patent Office

Office européen des brevets

(11) **EP 1 469 987 B1**

(12) **EUROPÄISCHE PATENTSCHRIFT**

(45) Veröffentlichungstag und Bekanntmachung des Hinweises auf die Patenterteilung:
**09.08.2006 Patentblatt 2006/32**

(21) Anmeldenummer: 03708002.5

(22) Anmeldetag: **23.01.2003**

(51) Int Cl.:
**B29C 70/54** *(2006.01)*   **B29B 15/10** *(2006.01)*

(86) Internationale Anmeldenummer:
**PCT/DE2003/000178**

(87) Internationale Veröffentlichungsnummer:
**WO 2003/064144 (07.08.2003 Gazette 2003/32)**

(54) **ENTGASUNGS VORRICHTUNG ZUR ENTGASUNG VON MATRIX-MATERIAL ZUR HERSTELLUNG VON FASERVERBUND BAUTEILEN**

DEGASSING DEVICE FOR DEGASSING MATRIX MATERIAL IN ORDER TO PRODUCE FIBRE-REINFORCED COMPONENTS

DISPOSITIF DE DEGAZAGE DE MATIERE MATRICE POUR LA FABRICATION DE PIECES EN MATIERE RENFORCEE PAR DES FIBRES

(84) Benannte Vertragsstaaten:
**AT BE BG CH CY CZ DE DK EE ES FI FR GB GR HU IE IT LI LU MC NL PT SE SI SK TR**

(30) Priorität: **31.01.2002 DE 10203976**

(43) Veröffentlichungstag der Anmeldung:
**27.10.2004 Patentblatt 2004/44**

(73) Patentinhaber: **EADS Deutschland GmbH 85521 Ottobrunn (DE)**

(72) Erfinder:
• **LIPPERT, Thomas 86179 Augsburg (DE)**
• **SCHRÖDER, Hans-Wolfgang 88090 Immenstaad (DE)**
• **STADLER, Franz 85113 Böhmfeld (DE)**
• **UTECHT, Stefan 86916 Kaufering (DE)**

(56) Entgegenhaltungen:
**EP-A- 1 038 656      DE-C- 10 013 409**
**US-A- 4 256 444**

**Beschreibung**

Die Erfindung betrifft eine Entgasungs-Vorrichtung zur Entgasung von für die Herstellung von Faserverbund-Bauteilen vorgesehenem Matrix-Material.

Bei der Herstellung von Faserverbundbauteilen, im folgenden auch als FV-Bauteile bezeichnet, mittels Harzinjektions-Verfahren kann es durch im MatrixMaterial enthaltene Gasblasen, gelöste Gase und sonstige flüchtige Bestandteile zur Bildung von Poren im entstehenden FV-Bauteil Kommen. Dadurch wird die Qualität der FV-Bauteile gemindert; wodurch die FV-Bauteile unbrauchbar werden können.

Aus dem deutschen Patent DE 100 13 409 C1 ist eine Vorrichtung bzw. ein Verfahren zur Herstellung von faserverstärkten Kunststoff-Bauteilen aus trockenen Faserverbund-Halbzeugen mittels eines Injektionsverfahrens zur Injektion von Matrix-Material mit einer Gas-durchlässigen und Matrixmaterial- undurchlässigen Membran, die zumindest einseitig um das Halbzeug herum angeordnet ist und einen ersten Raum bildet und in den Matrix-Material einführbar ist, mit einer an einer Oberfläche des Halbzeugs angeordneten Fließhilfe, mit einem am ersten Raum anliegenden zweiten, gegenüber einem Werkzeug abgedichteten Raum, der von der Umgebung mittels einer gas-und Matrixmaterial-undurchlässigen Folie abgegrenzt ist, wobei bei Absaugen von Luft aus dem zweiten Raum, Matrix-Material aus dem Vorratsbehälter in den evakuierten ersten Raum gesaugt wird und die Fließhilfe eine Verteilung des Matrixmaterials über der dieser zugewandten Oberfläche des Halbzeugs und ein Eindringen desselben senkrecht in das Halbzeug bewirkt.

Bei diesem Verfahren wird das Matrix-Material mittels einer Fließhilfe über das Faserverbund-Halbzeug verteilt und dringt von dort aus in das Halbzeug ein. Die Fließhilfe wird einseitig von der Gas-durchlässigen und Matrixmaterial-'undurchlässigen Membran begrenzt. Bei dem Transport des Matrix-Materials in der dünnen Fließhilfe erfolgt eine Entgasung des Matrix-Materials. Die Entgasung erfolgt durch die an die Fließhilfe angrenzende Membran hindurch in die evakuierte zweite Kammer. Zur wirksamen Entgasung ist es erforderlich, dass das Matrix-Material zunächst eine hinreichend große Strecke durch die Fließhilfe laufen kann, bevor es in das Halbzeug eintritt.

Bei den vielfach verwendeten Anguss-Anordnungen zur Einleitung des MatrixMaterials in die Fließhilfe findet eine derartige Filmentgasung unmittelbar unter den Angüssen nicht und in den daran direkt anschließenden Bereichen nur unvollkommen statt. Dementsprechend ist unter den Angüssen und in den daran anschließenden Bereichen die Wahrscheinlichkeit größer, dass es dort zur Porenbildung kommt.

Ein weiterer Nachteil dieses Verfahrens liegt darin, daß die Verwendung von zwei Kammern einen größeren Aufwand an Hilfsstoffen für die Membran gegenüber dem in der Faserverbundtechnik ebenfalls bekannten Einkammerprinzip erfordert.

Die Entgasung des Matrix-Materials kann außerdem nach einem aus dem allgemeinen Stand der Technik bekannten Verfahren erfolgen, bei dem das Matrix-Material in einem evakuierten Raum in einer dünnen Schicht (Film) umgegossen wird. Ein derartiger Entgasungsprozess ist generell umso effektiver, je dünner die zu entgasende Matrix-Materialschicht ist. Dieses auch FilmEntgasung genannte Verfahren zur Entgasung des Matrix-Materials hat beispielsweise folgende Nachteile:

- Der zusätzliche Entgasungsschritt ist ungünstig hinsichtlich Kosten und weitere Aufwände.

- Das Matrix-Material muss für den Entgasungsschritt erwärmt werden. Dadurch treten Alterungsvorgänge auf.

- Das Matrix-Material kann vor der späteren Verarbeitung zu Faserverbundbautellen erneut flüchtige Bestandteile aufnehmen, z.B. Wasserdampf aus der Luft.

- Das Matrix-Material kann im Zuge des Injektionsprozesses mit Hilfsstoffen unter Gasentwicklung reagieren. So wurden Reaktionen mit kostengünstigen flexiblen Silikonprofilen für Angüsse beobachtet.

Es ist die Aufgabe der Erfindung, Verfahren und Vorrichtungen zur Herstellung von FV-Bauteilen bereitzustellen, bei denen bzw. mit denen eine vorteilhafte Entgasung von Matrix-Material bei der Herstellung von FV-Bauteilen erfolgt.

Diese Aufgabe wird mit den Merkmalen der unabhängigen Patentansprüche gelöst. Weitere Ausführungsformen sind in den auf diese rückbezogenen Unteransprüche angegeben.

Die Erfindung kann in Kombination mit der Vorrichtung bzw. mit dem Verfahren nach dem deutschen Patent DE 100 13 409 C1 oder mit anderen Vorrichtungen oder Verfahren nach dem Stand der Technik angewendet werden, bei denen Harz oder Matrixmaterial zur Infiltration in Faserverbund-Halbzeuge einem Aufbau mit denselben zugeführt wird. Um das zugeführte Harz oder Matrixmaterial zu entgasen, sind die erfmdungsgemäßen Vorrichtungen vorgesehen.

Im folgenden wird die Erfindung an Hand der beiliegenden Figuren beschrieben, die zeigen:

- Figur 1 eine Ausführungsform der erfindungsgemäßen Entgasungs-Vorrichtung, die mit einem Einkammer- oder Zweikammer-Injektionsaufbau zusammenwirkt.

- Figur 2 eine weitere Ausführungsform der erfindungsgemäßen Entgasungs-Vorrichtung, die ebenfalls mit einem Einkammer- oder Zweikammer-Injektionsaufbau zusammenwirkt,

- Figur 3 einen Schnitt entlang der Linie A-A durch die Ausführungsform nach der Figur 2.

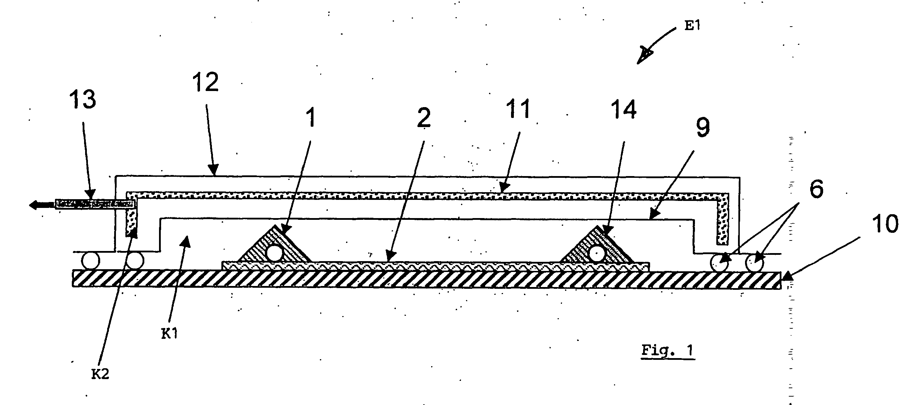

Erfindungsgemäß ist eine Entgasungs-Vorrichtung für das bei der Herstellung von FV-Bauteilen verwendete Matrix-Material vorgesehen, die bezüglich der FV-Herstellungsvorrichtung separat angeordnet ist. Das Matrix-Material, das allgemein ein Fluid ist, wird also in einer bezüglich der FV-Herstellungsvorrichtung separaten Entgasungs-Vorrichtung entgast (Figuren 1 bis 3).

Als in diesem Zusammenhang als textiles Gewebe bezeichnetes Material wird ein trockenes oder vorbehandeltes Faserverbund-Gewebe oder-Gelege verstanden, aus dem nach einer Harz-Infiltration und einer Nachbehandlung in einem Autoklaven ein Faserverbund-Bauteil herstellbar ist.

Ein Ausführungsbeispiel der erfindungsgemäßen Entgasungs-Vorrichtung für eine einem Injektionsprozess zur Faserverbund-Bauteilherstellung vorgeschaltete Entgasung des Matrixmaterials oder Harzes ist in Fig. 1 dargestellt. Der Injektionsprozess kann ein Einkammer- oder Mehrkammer-Prozess sein. Ein Mehrkammer-Prozeß ist in dem Patent DE 100 13 409 C1 beschrieben. Ein Einkammer-Prozeß ist beispielsweise in der Europäischen Patentanmeldung.EP 1 136 238 A2 beschrieben. Insbesonder bei einem Einkammer-Prozeß ist eine vorgeschaltete Entgasung nötig, da eine integrierte Entgasung wegen der fehlenden zweiten Kammer nicht möglich ist.

Diese erfindungsgemäße Entgasungs-Vorrichtung ist der eigentlichen Injektionsvorrichtung in einer Art und Weise vorgeschaltet, so dass das MatrixMaterial auf dem Weg von der Bevorratung zur Injektionsvorrichtung die Entgasungsvorrichtung durchströmen muss. Die Funktionsweise der vorgeschalteten Entgasungs-Vorrichtung beruht darauf, dass das Matrix-Material ein Zweikammersystem derart durchläuft, dass dabei die enthaltenen Gasblasen, gelösten Gase und sonstige flüchtige Bestandteile abgesaugt werden können.

Fig. 1 zeigt eine erste Ausführungsform der erfindungsgemäßen Entgasungs-Vorrichtung E1. Diese umfaßt eine Auflage-Vorrichtung 10, die auch eine Form sein kann, einen Abstandshalter oder ein Verteilergewebe 2, der auch eine Fließhilfe sein kann, einen Angusskanal oder eine Anguß-Vorrichtung 1 sowie eine Ausfluss-Vorrichtung 14, die beide Leitungsmündungen und auch in die Auflage-Vorrichtung 10 integriert sein können, eine Matrix-Material undurchlässige Schicht oder Sperrschicht 9, welche mittels einer Dichtung oder einem Dichtband 6 gegenüber der Auflage-Vorrichtung 10 abgedichtet ist und somit eine erste um die Anguß-Vorrichtung herum gelegene Kammer K1 der Entgasungs-Vorrichtung E1 bildet.

Eine derartige Sperrschicht 9 kann aus einer PTFE-Folie, einem Klebstoff und/oder einem Kaschiergewebe oder in Form eines Sandwichaufbaus aus diesen Materialien realisiert sein. Die Matrix-Material undurchlässige Schicht oder Sperrschicht 9 kann die Form einer Folie oder Platte aufweisen. Die Sperrschicht 9 ist Gas-durchlässig gebildet.

Über der Sperrschicht 9 befindet sich ein Entlüftungsgewebe oder Absauggewebe 11, das nach dem Stand der Technik gebildet ist. In Bezug auf die Auflage-Vorrichtung 10 gesehen über der Sperrschicht 9 und dem Entlüftungsgewebe 11 ist eine Folie 12 angeordnet, die mittels einer Dichtung 6 gegenüber der Auflage-Vorrichtung 10 abgedichtet ist. Dadurch bildet die Folie 12 und die Sperrschicht 9 zusammen eine zweite Kammer K2 der Entgasungsvorrichtung. Über einen Vakuumanschluss 13, der mit der zweiten Kammer K2 in Verbindung steht, wird die Entgasungs-Vorrichtung E1 evakuiert.

Der Entgasungsprozess läuft folgendermaßen ab: Das Matrix-Material gelangt über die Anguss-Vorrichtung 1 in die Entgasungs-Vorrichtung E1. Von dort strömt das Matrix-Material in das Verteilergewebe oder den Abstandshalter 2. Während das Matrix-Material diesen Abstandhalter 2 durchströmt, werden über die semipermeable Folie 9 bei Anlegen von Unterdruck Ober den Vakuumanschluss 13 die im Matrix-Material enthaltenen Gasblasen, gelösten Gase und sonstige flüchtige Bestandteile abgesaugt. Danach strömt das entgaste Matrix-Material über die Ausfluss-Vorrichtung 14 zum Aufbau mit dem Faserverbund-Halbzeug, d.h. zum eigentlichen Injektionsprozess.

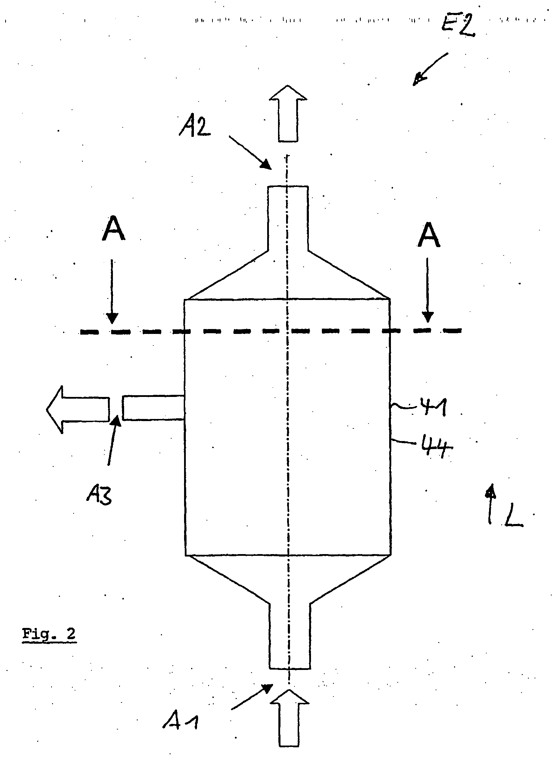

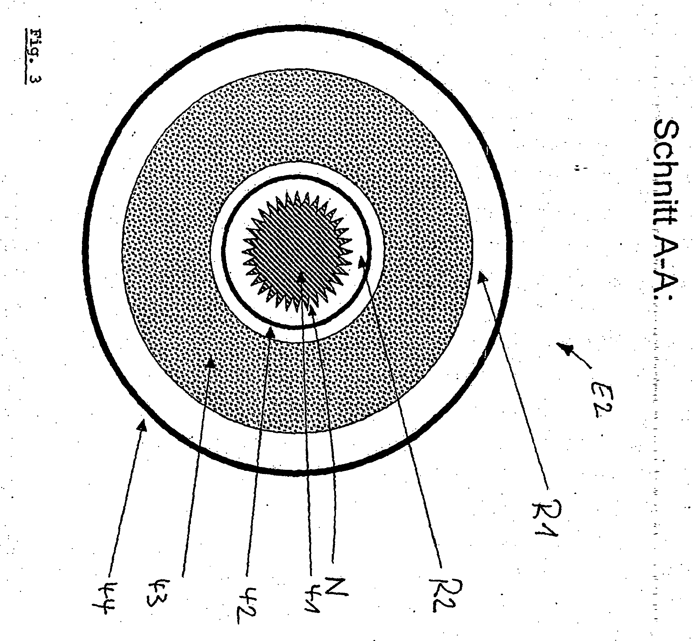

Ein weiteres Ausführungsbeispiel erfindungsgemäßen Entgasungs-Vorrichtung ist in den Figur 2 und 3 dargestellt.

Die Vorrichtung weist einen ersten Anschluss A1, mit dem das zu entgasende Fluid oder Matrix-Material in die Entgasungs-Vorrichtung geleitet wird, einen zweiten Anschluss A2 zur Leitung des entgasten Fluids aus der Entgasungs-Vorrichtung sowie einen dritten Anschluss A3 zum Anlegen von Unterdruck oder Vakuum an das Innere der Entgasungs-Vorrichtung auf.

Die Entgasungs-Vorrichtung E2 nach den Figuren 2 und 3 weist einen inneren Körper 41 auf. Dieser ist vorzugsweise auf dessen Oberfläche mit Nuten N versehen. Sie können in Längsrichtung L gesehen insbesondere länglich oder spiralförmig gebildet sein. Die Bildung der Nuten N hängt von der gewünschten Verweilzeit des Matrix-Materials ab.

Die Entgasungs-Vorrichtung E2 weist weiterhin eine Harz-undurchlässige und Luft-durchlässige Folie 42 auf. Diese ermöglicht einen Entgasungsvorgang nach Anlegen von Unterdruck über den Vakuumanschluß A3. Sie trennt einen die Folie 42 umgebenen ersten Raum R1 von einem im Inneren der Folie 42 befindlichen zweiten Raum R2.

Der erste Raum R1 wird von einer Aufnahme-Vorrichtung oder Zwischenschicht 43 umgeben. Diese ist mit der Folie 42 verbunden, um für diese als Träger zu dienen. Sie kann aus einer gasdurchlässigen Keramik bzw. aus einem Lochblech gebildet sein. Seine Funktion ist auf den Austausch des Gases des MatrixMaterials aufgrund von Unterdruck gerichtet.

Die Entgasungs-Vorrichtung E2 weist weiterhin einen äußeren Behälter oder ein Gehäuse 44 auf. Die Größe des äußeren Gehäuses 44 hängt von der zu entgasenden Harzmenge ab.

Der Körper oder das Gehäuse 41 bzw. 44 können jegliche, auch unregelmäßige Formen haben. Auch können die diese flexibel gebildet sein. Die Form oder das Material richtet sich nach dem Anwendungsfall. Insbesondere können diese zylindrische Gestalt haben.

In Figur 3 ist ein Schnitt der Entgasungs-Vorrichtung E2 dargestellt. Der erste Raum R1 wird durch den äußeren Behälter 44 und der Folie 42 gebildet. Dieser Raum wird durch den Vakuum-Anschluss 42 evakuiert, wodurch das unentgaste Fluid (Matrix-Material) durch die Öffnung A1 in die Entgasungs-Vorrichtung strömt. Durch das Anlegen von Unterdruck besteht ein Unterdruck-Gefälle zwischen dem ersten Raum R1 und dem zweiten Raum R2, wobei der Unterdruck im ersten Raum R1 größer ist als der Unterdruck im zweiten Raum R2.

Die Funktionsweise der Entgasungs-Vorrichtung E2 ist wie folgt. Der erste Raum R1 wird durch Vakuumanschluss 13 evakuiert und die Vorrichtung wird zwischen eine Injektionsleitung (Matrix-Leitung) gebracht. Das unentgaste Fluid (MatrixMaterial) strömt durch die Öffnung A1 in die Vorrichtung. Es muss nun über den Körper 41 und über die Folie 42 fließen. Es besteht ein Druckgefälle zwischen Raum 1 und Raum 2. Unterdruck Raum R1 ist größer als Unterdruck Raum R2. Das im Fluid (Matrix-Material) enthaltende Gas wird nun auf Grund des Druckgefälles aus dem Fluid gelöst. Die semipermeable Folie 42 ermöglicht, dass das Gas in den Raum R1 gelangen kann. Das entgaste Fluid fließt nach dem Entgasen durch Öffnung A2.

Die physikalischen Zusammenhänge sind dabei:

Mit

- Anschluss A1: Druckzustand: P Fluid Einlass
- Anschluss A2: Druckzustand: P Fluid Auslass
- Vakuumanschluss A3: Druckzustand: p Vakuum

gilt:

$$(1) \qquad p_{Vakuum} < p_{Fluid\ Auslass} < p_{Fluid\ Einlass}$$

$$(2) \qquad p_{Vakuum} <= p_{Fluid\ Dampfdruck}$$

## Patentansprüche

1. Entgasungs-Vorrichtung (E1) zur Entgasung von für die Herstellung von Faserverbund-Bauteilen vorgesehenem Matrixmaterial

   - mit einer auf jeweils einer Auflage-Vorrichtung (10) angeordneten Anguß-Vorrichtung (1) zur Leitung des zu entgasenden Matrix-Materials in die Entgasungs-Vorrichtung und einer Ausfluss-Vorrichtung (14), einem Verteilergewebe (2),
   - mit einer Matrixmaterial-undurchlässigen und Gas-durchlässigen Schicht (9), welche mittels einer Dichtung (6) gegenüber der Auflage-Vorrichtung (10) abgedichtet ist zur Bildung einer ersten die Anguß-Vorrichtung (1) und der Ausfluss-Vorrichtung (14) umgebenden Kammer (K1),
   - mit einer die Schicht (9) umgebenden und gegenüber der Auflage-Vorrichtung (10) abgedichteten Folie (12) zur Bildung einer zweiten Kammer (K2), in der ein Entlüftungsgewebe (11) gelegen ist.
   - mit einem mit der zweiten Kammer (K2) in Verbindung stehenden Vakuumanschluss (13) zur Entgasung des Matrix-Materials in der Entgasungs-Vorrichtung (E1).

2. Entgasungs-Vorrichtung (E1) zur Entgasung von für die Herstellung von Faserverbund-Bauteilen vorgesehenem Matrixmaterial, gemäß Anspruch 1, wobei die Anguß-Vorrichtung (1) und / oder die Ausfluss-Vorrichtung (14) in die Auflage-Vorrichtung 10 integriert sind.

3. Entgasungs-Vorrichtung (E1) zur Entgasung von für die Herstellung von Faserverbund-Bauteilen vorgesehenem Matrixmaterial, gemäß Anspruch 1, wobei die Sperrschicht (9) eine Folie oder Platte ist.

4. Entgasungs-Vorrichtung (E1) zur Entgasung von für die Herstellung von Faserverbund-Bauteilen vorgesehenem Matrixmaterial, gemäß Anspruch 1, wobei die Schicht (9) aus einer PTFE-Folie, einem Klebstoff und/oder einem Kaschiergewebe oder in Form eines Sandwichaufbaus aus diesen Materialien realisiert ist.

5. Entgasungs-Vorrichtung (E2) zur Entgasung von für die Herstellung von Faserverbund-Bauteilen vorgesehenem Matrixmaterial

   - mit einem inneren Körper (41), mit einem diesem umgebenden äußeren Behälter (44) und einer zwischen diesen angeordneten Matrixmaterial-undurchlässigen und Gas-durchlässigen Folie (42) zur Ausbildung eines zweiten Raums (R2) zwischen der Folie (42) und dem inneren Körper (41) und eines ersten Raums (R1) zwischen der Folie (42) und dem äußeren Behälter (44), wobei die Folie (42) von einer Zwischenschicht (43) gehalten wird,
   - mit einem ersten Anschluss (A1) zur Leitung des zu entgasenden MatrixMaterials in den zweiten Raum (R2), einem Anschluss (A2) zur Leitung des entgasten Matrix-Materials aus demselben, und einem Anschluss (A3) zum Anlegen von Unterdruck im ersten Raum (R1).

6. Entgasungs-Vorrichtung (E2) zur Entgasung von für die Herstellung von Faserverbund-Bauteilen vorgesehenem Matrixmaterial nach dem Anspruch 5, wobei die Oberfläche des inneren Körpers (41) mit Nuten versehen ist.

7. Entgasungs-Vorrichtung (E2) zur Entgasung von für die Herstellung von Faserverbund-Bauteilen vorgesehenem Matrixmaterial nach dem Anspruch 6, wobei die Nuten auf der Oberfläche des inneren Körpers (41) in dessen Längsrichtung gesehen länglich oder spiralförmig verlaufen.

8. Entgasungs-Vorrichtung (E2) zur Entgasung von für die Herstellung von Faserverbund-Bauteilen vorgesehenem Matrixmaterial nach einem der Ansprüche 5 bis 7, wobei die Zwischenschicht (43) aus einer gasdurchlässigen Keramik gebildet ist.

9. Entgasungs-Vorrichtung (E2) zur Entgasung von für die Herstellung von Faserverbund-Bauteilen vorgesehenem Matrixmaterial nach einem der Ansprüche 5 bis 7, wobei die Zwischenschicht (43) aus einem Lochblech gebildet ist.

**Claims**

1. A de-gassing device (E1) for degassing matrix material provided for the manufacture of fibre composite components,

   - having, arranged in each case on a support device (10), a gate device (1) for conducting the matrix material to be degassed into the degassing device, a discharge device (14) and a distribution fabric (2),
   - having a matrix material-impermeable and gas-permeable layer (9), which is sealed by means of a seal (6) with respect to the support device (10) to form a first chamber (K1) surrounding the gate device (1) and the discharge device (14),
   - having a film (12) surrounding the layer (9) and sealed with respect to the support device (10) to form a second chamber (K2), in which a venting fabric (11) is located,
   - having a vacuum connection (13) in communication with the second chamber (K2) for degassing the matrix material in the degassing device (E1).

2. A de-gassing device (E1) for degassing matrix material provided for the manufacture of fibre composite components, according to claim 1, wherein the gate device (1) and/or the discharge device (14) are integrated in the support device (10).

3. A de-gassing device (E1) for degassing matrix material provided for the manufacture of fibre composite components, according to claim 1, wherein the barrier layer (9) is a film or panel.

**4.** A de-gassing device (E1) for degassing matrix material provided for the manufacture of fibre composite components, according to claim 1, wherein the layer (9) is formed by a PTFE film, an adhesive and/or a backing fabric or is in the form of a sandwich construction made from these materials.

**5.** A de-gassing device (E2) for degassing matrix material provided for the manufacture of fibre composite components,

- having an inner body (41), with an outer container (44) surrounding the same and arranged between them a matrix material-impermeable and gas-permeable film (42) to form a second space (R2) between the film (42) and the inner body (41) and a first space (R1) between the film (42) and the outer container (44), the film (42) being held by an intermediate layer (43),
- having a first connection (A1) for conducting the matrix material to be degassed into the second space (R2), a connection (A2) for conducting the degassed matrix material out of the same, and a connection (A3) for applying negative pressure in the first space (R1).

**6.** A de-gassing device (E2) for degassing matrix material provided for the manufacture of fibre composite components, according to claim 5, wherein the surface of the inner body (42) is provided with grooves.

**7.** A de-gassing device (E2) for degassing matrix material provided for the manufacture of fibre composite components, according to claim 6, wherein the grooves on the surface of the inner body (41), viewed in the longitudinal direction thereof, are of elongate or spiral form.

**8.** A de-gassing device (E2) for degassing matrix material provided for the manufacture of fibre composite components, according to any one of claims 5 to 7, wherein the intermediate layer (43) is formed from a gas-permeable ceramic material.

**9.** A de-gassing device (E2) for degassing matrix material provided for the manufacture of fibre composite components, according to any one of claims 5 to 7, wherein the intermediate layer (43) is formed from a perforated plate.


**Revendications**

**1.** Dispositif de dégazage (E1) pour le dégazage de matière matrice prévue pour la fabrication d'éléments de construction en matière composite renforcée par des fibres

- avec un dispositif de coulée (1) placé sur un dispositif de support (10) pour diriger la matière matrice à dégazer dans le dispositif de dégazage et un dispositif de décharge (14), un tissu de distribution (2),
- avec une couche (9) imperméable à la matière matrice et perméable au gaz qui est étanchée à l'aide d'une garniture d'étanchéité (6) par rapport au dispositif de support (10) pour former un premier compartiment (K1) entourant le dispositif de coulée (1) et le dispositif de décharge (14),
- avec une feuille (12) entourant la couche (9) et étanchée par rapport au dispositif de support (10) pour former un deuxième compartiment (K2) dans lequel est posé un tissu d'aération,
- avec un raccord sous vide (13) communiquant avec le deuxième compartiment (K2) pour le dégazage de la matière matrice dans le dispositif de dégazage (E1).

**2.** Dispositif de dégazage (E1) pour le dégazage de matière matrice prévue pour la fabrication d'éléments de construction en matière composite renforcée par des fibres selon la revendication 1, dans lequel le dispositif de coulée (1) et/ou le dispositif de décharge (14) sont intégrés dans le dispositif de support (10).

**3.** Dispositif de dégazage (E1) pour le dégazage de matière matrice prévue pour la fabrication d'éléments de construction en matière composite renforcée par des fibres selon la revendication 1, dans lequel la couche de barrage (9) est une feuille ou une plaque.

**4.** Dispositif de dégazage (E1) pour le dégazage de matière matrice prévue pour la fabrication d'éléments de construction en matière composite renforcée par des fibres selon la revendication 1, dans lequel la couche (9) est réalisée à partir d'une feuille en PTFE, d'une colle et/ou d'un tissu de contreplacage ou sous forme d'une structure sandwich faite avec ces matières.

**5.** Dispositif de dégazage (E2) pour le dégazage de matière matrice prévue pour la fabrication d'éléments de construction en matière composite renforcée par des fibres

- avec un corps intérieur (41), avec un récipient extérieur (44) entourant celui-ci, et une feuille (42) imperméable à la matière matrice et perméable au gaz placée entre ceux-ci pour former un deuxième espace (R2) entre la feuille (42) et le corps intérieur (41) et un premier espace (R1) entre la feuille (42) et récipient extérieur (44), la feuille (42) étant maintenue par une couche intermédiaire (43),

- avec un premier raccord (A1) pour diriger la matière matrice à dégazer dans le deuxième espace (R2), un raccord (A2) pour diriger la matière matrice dégazée hors de celui-ci, et un raccord (A3) pour établir une dépression dans le premier espace (R1) .

6. Dispositif de dégazage (E2) pour le dégazage de matière matrice prévue pour la fabrication d'éléments de construction en matière composite renforcée par des fibres selon la revendication 5, dans lequel la surface du corps intérieur (41) est munie de rainures.

7. Dispositif de dégazage (E2) pour le dégazage de matière matrice prévue pour la fabrication d'éléments de construction en matière composite renforcée par des fibres selon la revendication 6, dans lequel les rainures sur la surface du corps intérieur (41) s'étendent selon une forme oblongue ou en spirale, vues dans le sens longitudinal du corps intérieur.

8. Dispositif de dégazage (E2) pour le dégazage de matière matrice prévue pour la fabrication d'éléments de construction en matière composite renforcée par des fibres selon l'une quelconque des revendications 5 à 7, dans lequel la couche intermédiaire (43) est constituée d'une céramique perméable au gaz.

9. Dispositif de dégazage (E2) pour le dégazage de matière matrice prévue pour la fabrication d'éléments de construction en matière composite renforcée par des fibres selon l'une quelconque des revendications 5 à 7, dans lequel la couche intermédiaire (43) est formée par une tôle perforée.

Fig. 1

E2

A2

A

A

41

44

L

A3

Fig. 2

A1

## Schnitt A-A:

Fig. 3